# EUROPEAN PATENT APPLICATION

(11) **EP 4 336 469 A1**
(43) Date of publication of application: **13.03.2024**
(21) Application number: 22306325.6
(22) Date of filing: 07.09.2022
(51) Int. Cl.: G06V 30/14, G06Q 20/40, G06V 30/413, G06V 30/414, G06V 30/42

(54) **METHOD FOR DETERMINING THE QUALITY OF A CAPTURED IMAGE**

(71) Applicant: THALES DIS FRANCE SAS, 92190 Meudon (FR)
(72) Inventor: HUGOT, Didier, 92350 Le Plessis Robinson (FR)
(74) Representative: Quintero Romero, Manuel

(57) **Abstract**

The present invention provides a method for determining the quality of a captured image of an identification document, wherein the identification document comprises machine-recognizable text fields, the method comprising the following steps:
- identifying at least two regions of the captured image, the identified regions forming substantially the complete area of the identification document,
- applying a text recognition function to the captured image and registering the text fields detected associated with each region,
- determining whether at least one text field has been detected per region, and
- if at least one text field has been detected in a number of regions greater than a preestablished number, then the quality of the captured image is consider as acceptable.

## Description

### TECHNICAL FIELD

The present invention relates to the technical field of identity verification and, namely, to the field of mobile-based identity verification requiring image capturing.

More particularly, the present invention allows determining easily the quality of the image of the identity document that the user wishes to use for identity verification purposes in order to improve his/her experience.

### BACKGROUND OF THE INVENTION

In today's digital world, service providers frequently ask their new and existing customers for authenticating themselves by deploying remote user on-boarding solutions and enabling Know-Your-Customer (KYC) features. Service providers aim at verifying the authenticity of their identity documents (ID documents) online and hence digitally check their identities. Nowadays, ID verification has become critical in order to efficiently detect fraud and therefore build user trust in the digital world.

Although this allows a smoother user journey for many markets, it also brings concerns regarding user experience, privacy, security, and deployment flexibility.

Among these drawbacks, it has been discovered that user experience is drastically degraded when user fails repetitively in capturing good-quality images or when facing long authenticating time delays. For instance, while performing an online identity verification, the user is prompted to use the camera of his/her handset to capture images from a face (i.e., self-captured face image or "selfie") and ID documents (e.g., recto or recto/verso). The latter capture can be based either on regular photos (the user takes photos of the different elements) or selected and extracted from a video stream.

During the process of capturing the images, as mentioned, it is essential having good quality images of the ID documents for visibly distinguishing the pertinent features (sometimes-small characteristics). Since these ID documents need to be captured with as many details as possible, it is often required approaching the ID document close to the camera. As known, the closer the object is from the camera, the more sensitive it is to micro movements resulting into blurriness on some or all parts of the photo. This process gets more complex:
- when the image is automatically extracted from the video stream whereas in the case of a single picture the user decides when to take it, and
- when the image capture is done through a web browser.

Although it is possible to detect blurriness in an image, this is not the only parameter degrading the quality of an image. Parameters such as the exposure, luminosity, contrast, and light spot detection affect the image quality as well. Checking and detecting all these parameters in real-time situation for validating the picture before proceeding with the actual ID verification is time consuming and hence degrades the user experience.

There would be also challenges from ambient light interference, typically:
- a strong ambient light towards the camera can bring extreme back-lighting and to dark the ID document rendering it poorly recognizable,
- a strong ambient light towards the ID document can bring extreme lighting and over exposure on it,
- inclined capturing angles or strong side ambient light can cause different exposures and light spot effects, and
- in a dark environment without enough light, the camera might have difficulties in accurately detecting the ID document features.

Thus, there is a need in the industry for a continuous improvement on the user experience for the online ID verification solution.

### SUMMARY OF THE INVENTION

The present invention provides a solution for the aforementioned problems by a method for determining the quality of a captured image of an identification document according to claim 1, an electronic device-based module according to claim 11, and an electronic device according to claim 12. In dependent claims, preferred embodiments of the invention are defined.

In a first inventive aspect, the invention provides a method for determining the quality of a captured image of an identification document, wherein the identification document comprises machine-recognizable text fields, the method comprising the following steps:
- identifying at least two regions of the captured image, the identified regions forming substantially the complete area of the identification document,
- applying a text recognition function to the captured image and registering the text fields detected associated with each region,
- determining whether at least one text field has been detected per region, and
- if at least one text field has been detected in a number of regions greater than a pre-established number, then the quality of the captured image is considered as acceptable.

Unlike prior art solutions that attempt to detect the quality of a captured image based on inherent image characteristic analysis, the present invention provides a simpler and easier to implement solution based on correlating the quality of an image to the ability to recognize text fields from different parts of the documents.

The process of extracting text from an image is sensitive to its quality, and so, if it is possible to identify different text fields over the image of the ID document and map them to different (preferably all the) zones on the document, the image is then considered globally as of good quality.

In a particular embodiment, the quality of the captured image is acceptable when pre-determined text fields are found in specific regions.

As known, the majority of ID documents follow a specific format where a normalized picture of the holder is found on the left-hand side of the recto side, text-fields with personal data are found on the right-hand side of the recto side, and information about the issuer can be typically found on the top side of the recto side.

The most common types of ID documents are, for example, an identity card (ID card), passport, driver's license, health insurance card, firearm owner's identification card, boating license, fishing license, commercial driver's license, etc. or other relevant descriptive document issued by an organization that vouches to it and allows to verify the identity and/or alleged qualification of the holder. Particularly, the reference type of the ID document may further differ depending on the issuing country, state / region, date, or city, as well as the issuing organization, agency, department, or bureau.

Hence, the level of quality of the image under study can be inferred from other additional criteria such as the region area / text density for a pre-defined region. That is, if none or only a few text fields are found on a region with the highest text density expected, it is a clear indication of a low quality image without unnecessary further investigations.

In a particular embodiment, at least some of the different text fields detectable on the captured image are known beforehand. In a preferred embodiment, the text fields are generic text fields associated with identity documents such as name, surname, date of birth, nationality, passport, etc. In a more preferred embodiment, all the text fields detectable on the captured image are known beforehand. In an embodiment, at least some of the different text fields detectable on the captured image have an unknown meaning.

The identity documents are composed of a variety of key / value pairs where the "keys" are the known generic text fields such as "Surname", "Given name(s)", "Holder's signature", "Place of birth", "Date of expiry", "Address", "Nationality", etc. and the "values" are the personal identifiable identity attributes of the holder. Typically, the values are typed underneath the generic text fields such as "John" will be underneath the key "Given name".

If the reference type of identity document is known (e.g., French passport 2022), the distribution of these text fields are also known beforehand and hence, the quality of the image can be determined by the number of text fields that should be able to and are indeed recognized on the picture.

That is, additionally or alternatively to the criteria of area/text density, the quality of the image can be further inferred from the percentage of unfound known text fields so that, only when the percentage is below than a pre-established threshold, the quality of the image is considered as unacceptable, and *vice-versa.*

On another scenario, the detection of text fields can feed an Artificial Intelligence-driven inference module configured to verify the type of identity document. That is, by knowing what text fields are found and mapping them to particular regions of the identity document, the content and position are known, so the number of possible document types are hereby reduced.

Therefore, in a particular embodiment, the number and content of text fields detected per region is further processed (i.e., inference phase) for classifying the identity document of the image.

The inference phase helps verifiers assess if the identity document in the image, for example, is a French passport, U.S. passport, or any other identification document issued by the same or another agency. In practice, the inference phase provides as output a list of identity document types ranked according to a most probable match of the (otherwise unknown) image.

As a matter of fact, shortlisting the types of possible identity documents also helps clarifying or completing the content of detected but unrecognized field texts. That is, sometimes the low quality of certain parts of the image (e.g., blurriness) prevents decipher by itself the text content but thanks to the shortlisted possibilities of ID document types, it can be ascertained whether some text field is likely matching the position of unrecognizable field texts in order to suggest completing contents. These text field-completion suggestions can help a (convolutional) neural network system in improving the underneath text values detection for the eventual verification phase.

In a particular embodiment, the number of regions are at least 4 or at least 6, most preferred, exactly 6 regions. This distribution will ensure that all of the regions contain at last one text field. Then, different levels of image quality (e.g., low medium high) can then be proposed depending on the number of regions with text detected. If, for example, the image is divided into 4 zones and we found text in 3 of them, then the quality may be considered as medium and could be a way to detect a defect on the picture like a light spot.

In a particular embodiment, each region of the captured image may cover a similar or different area of the identification document, preferably a similar area. As known, when using the handset device camera for capturing the video or image, the identity document might not be centered but tilted and disoriented with respect to the recording plane.

The lines separating each of the regions from each other can be fixed with respect to the field of view i.e., with respect to the captured image regardless of the position of the document, or they can be dynamically adapted to better suit the orientation of the identity document captured in the picture. In the former case, each of the regions formed by the fixed lines will cover more or less area of the identity document, while in the latter case the lines will dynamically adjust to the orientation of the identity document in the field of view.

Only when there is a pre-processing of the image selecting the corners of the identity document in the captured image, and then from the corner information, cropping and de-skewing the image as part of a normalization process, these two cases of fixed and adjustable lines will match. "De-skewing" is the process of straightening an image that has been scanned or captured crookedly; that is, an image that is slanting too far in one direction, or one that is misaligned. "Cropping" is the removal of unwanted outer areas, namely, those portions irrelevant, unnecessary, or serving of little value with respect to the security patterns or other image features relevant to categorizing or classifying the embedded identity document in the image.

Using the fixed lines will impose the user to pay attention to the image-capturing step to assure good orientation and alignment of the identity document visible within the field of view with the boundaries of the picture. The adjustable lines will not impose such a user skill constraints and hence will be user-friendly.

Thus, having this corner-driven normalization process of the captured image for setting the regions greatly enhances the user's experience. The user can be prompted or not with the normalized image, so that he or she can also visualize the adjustable lines directly on the original captured image.

When the lines are not fixed for guiding the user during image capturing, these lines can be not shown or visible to improve the interface appearance.

In a particular embodiment, applying a text recognition function to the captured image comprises searching for objects on the captured image, identifying those related to semantic fields, and recognizing the text thereof. In a preferred embodiment, the text recognition function is an optical character recognition (OCR) function.

As mentioned, this text recognition function can be applied to each frame image of a video stream in order to select the best quality frame. Thus, the application will automatically select the frame of the ongoing video capturing that meets the criteria imposed, e.g., when text fields are detected and extracted in all the regions or where specific text fields are detected or when the density of text / area per region is considered as acceptable.

In a second inventive aspect, the invention provides an electronic device-based module for determining the quality of a captured image of an identification document, wherein the module is configured to:
- receive an image of an identification document captured by the electronic device, and
- determining the quality of the captured image by the method according to any of the embodiments of the first inventive aspect.

The electronic device can be any type of portable computing device e.g., smartphone, laptop computer, mobile phone, navigation device, game console, desktop computer system, workstation, Internet appliance and the like, or a stationary device such as a kiosk provided with a scanner and cameras for capturing images. The electronic device is configured to perform the capture and image quality assessment itself or can receive the image from another camera-equipped device.

In a particular embodiment, this quality assessment module is configured to receive the captured image, process it as discussed and, if its quality is considered as acceptable, the module is further configured to send it to post-processing purposes such as: reference type document identification module and identity verification module.

In addition, the image quality assessment can occur in-situ through the electronic device or can be requested via a communication network to a remote server-based document identification and analysis system comprising Artificial Intelligence Convolutional Neural Network models coupled to different databases (e.g., storing genuine reference-type identity documents). Thus, the electronic device will only capture or get capture the image and send it together with an ID verification request to backend services.

In a third inventive aspect, the invention provides an electronic device configured to:
- receive a request for user identity verification,
- capture an image or a video stream of an identification document and selecting one image frame thereof,
- determine, by itself or through a backend service, the quality of the captured image by using a module according to any of the embodiments of the second inventive aspect, and
- verify, by itself or through a backend service, the identity of the user by extracting and analyzing the information contained in the identification document captured and comparing it with user's data inputted separately.

In a particular embodiment, the user's data inputted separately comprises a picture of user's face or user's authenticated data stored remotely.

In a particular embodiment, the electronic device also comprises a facial biometric module optionally integrating a liveness detection submodule to facilitate end-user experience. Therefore, the user is asked to take a selfie, and then the facial biometric module analyses the liveness of the selfie and securely matches it against the portrait on the identity document in the image resulting in an identity biometric verification.

All the features described in this specification (including the claims, description and drawings) and/or all the steps of the described method can be combined in any combination, with the exception of combinations of such mutually exclusive features and/or steps.

### DESCRIPTION OF THE DRAWINGS

These and other characteristics and advantages of the invention will become clearly understood in view of the detailed description of the invention which becomes apparent from a preferred embodiment of the invention, given just as an example and not being limited thereto, with reference to the drawings.
- Figure 1: This figure depicts a flowchart with the main steps of a typical handset-based remote identity verification.
- Figure 2: This figure shows an embodiment of an electronic device configured to carry out the method steps according to the invention.
- Figure 3: This figure shows a schematic representation of an identity document with text fields highlighted as Regions of Interest (ROI).
- Figure 4: This figure shows the image of the identity document of figure 3 split in 6 different regions.

### DETAILED DESCRIPTION OF THE INVENTION

As it will be appreciated by one skilled in the art, aspects of the present invention may be embodied as a method for determining the quality of a captured image of an identification document, an electronic device-based module, or an electronic device.

The present invention relates to products and solutions where the user needs to prove his/her identity when remotely onboarding, authenticating to, or requesting a service. The identity verification may occur either through a dedicated SoftWare application installed in the electronic device, or in cooperation with another service provider's mobile application to which the user has logged-in, or through a web browser in the electronic device.

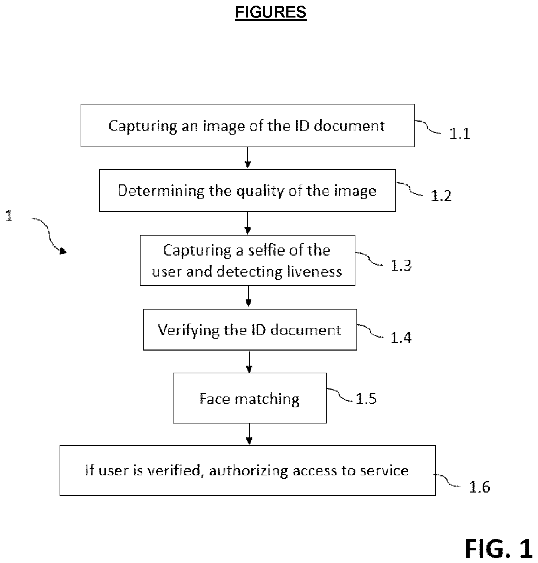

In **figure 1****,** it is depicted the main steps of a remote identity verification method (1) which comprises:
- (1.1) capturing an image containing an alleged user's identity document.
- (1.2) the instant image capture or video recording is followed by a (real time) quality checks according to the present invention for a smooth user experience. In addition, the operation of the camera and the detection module can be additionally driven and synchronized by Artificial Intelligence to improve the automatic detection of the ID document in the field of view.
- (1.3) capturing the user's face and, optionally, detecting liveness. Facial biometrics allows recognizing and measuring facial features from a captured image of a face (e.g., from a selfie). Liveness detection further ensures that a real person was physically present during the capture and detects any spoof attack.
- (1.4) verifying the document. The authenticity of the captured document is checked to prevent fraud by verifying data integrity, consistency and security elements.
- (1.5) face matching. The likelihood that the captured person is the same person as the one on the ID document is examined and determined.
- (1.6) if user's identity is verified, he/she is enrolled to the requested service.

As it will be discussed hereinafter, the quality assessment in step 1.2 can be performed at server side and hence the inputted user's data (identity document image, selfie, credentials, and/or personal information) is sent altogether after proper collection through user's electronic device(s).

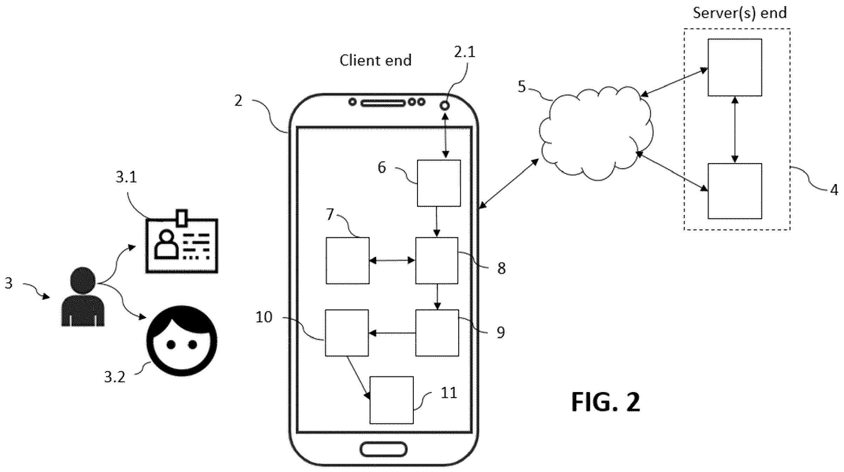

In **figure 2****,** it is schematically represented an electronic device (2) configured to carry out the method steps according to the invention. In particular, the electronic device is configured to verify identities based on photos of identity documents (3.1) (e.g., recto or recto/verso) and a selfie (3.2) of the user (3). These images (3.1, 3.2) are hereby processed to verify that an identity document is genuine and the photo being on the document matching with the provided selfie.

The electronic device of figure 2 is exemplified and represented throughout the figures as a mobile phone configured to receive, from a user (3) at least login credentials for his/her end-user account(s), verify them and let said user to run applications and/or initiate different processes.

The mobile phone includes one or several (micro)processors (and/or a (micro)controller(s)), as data processing means (not shown), comprising and/or being connected to one or several memories, as data storing means, comprising or being connected to means for interfacing with the user, such as a Man Machine Interface (or MMI), and comprising or being connected to an Input/Output (or I/O) interface(s) that are internally all connected, through an internal bidirectional data bus.

The I/O interface(s) may include a wired and/or a wireless interface, to exchange, over a contact and/or Contactless (or CTL) link(s), with a user. The MMI may include a display screen(s), a keyboard(s), a loudspeaker(s) and/or a camera(s) and allows the user to interact with the mobile phone. The MMI may be used for getting data entered and/or provided by the user. In particular, the MMI comprises a camera set (2.1) configured to capture images of the user's face (3.2) and his/her identity document (3.1), wherein this camera set may comprise at least a front camera and at least a rear camera, both of the cameras being preferably RGB cameras.

The mobile phone memory(ies) may include one or several volatile memories and/or one or several non-volatile memories (not shown). The memory(ies) may store data, such as an ID(s) relating to the mobile phone or hosted chip, that allows identifying uniquely and addressing the mobile phone. The memory(ies) also stores the Operating System (OS) and applications which are adapted to provide services to the user (not shown). Among these applications, the mobile phone has installed an orchestrator able to receive ID verification requests from service provider apps or web browsers and e.g., routing them towards backend services hosted in server(s) (4). That is, the mobile phone is configured to send information over a communication network (5) to the server end (4). In particular, the orchestrator and the backend infrastructure may communicate via one or more Application Program Interfaces, APIs, using HTTP over TLS.

As mentioned, the electronic device (2) can verify the identity of the document holder by itself or in cooperation with remote server(s) (4). Therefore, in a basic configuration, the electronic device only comprises a camera module (6) configured to capture images of the identity document (3.1) and the user's face (3.2) in cooperation with the camera set (2.1) and then send them to server(s) end for further processing, biometrics matching, and ID verification. In this basic embodiment, the electronic device typically comprises an application or orchestrator configured, on one side, to receive requests from other service provider applications installed in the device, or from web browsers and, on the other side, communicate with backend services running in the server(s).

These one or more servers may comprise (jointly or separately) others modules which allows performing the steps which are being described hereinafter in relation with the mobile phone. The mobile phone (or the server) also comprises a quality module (7) configured to determine the quality of a captured image of an identification document, a detection module (8) configured to detect objects (so called, Regions of Interest or "ROI") on the image, an inference module (9) configured to infer the reference type of the captured identity document, a biometric module (10) configured to extract and compare the features of the captured face with the face in the identity document, and a verification module (11) to verify user's identity.

When the electronic device integrates all the modules, it comprises an installable package in the form of a Software Development Kit (SDK) configured to carry out by itself all or part of the steps that can be allocated to and performed by the server side (4). In another example, one or more modules are feature(s) of the operating system (OS) of the electronic device, implemented as part of iOS or Android. The skilled person in the art knows how to distribute functionalities among client and server side to enhance the operation.

In a particular embodiment, the quality module (7) and the detection module (8) process the captured image to, first, apply a (convolutional) neural network (CNN) to identify the different objects or ROIs (3.3) on the image and, second, determine if its quality is acceptable according to the present invention.

A Convolutional Neural Network (CNN) is a Deep Learning algorithm used to analyze imagery which takes in an input image, assign importance (e.g., learnable weights and biases) to various aspects and objects (3.3) in the image and is able to differentiate one from the other. CNNs are a specialized type of neural networks that use convolution in place of general matrix multiplication in at least one of their layers, mostly used in image recognition and processing specifically designed to process pixel data. It consists of an input layer, hidden layers and an output layer. The CNN is especially configured to reduce the images into a form which is simpler to process without sacrificing feature reduction while maintaining its ability to discriminate and classify images.

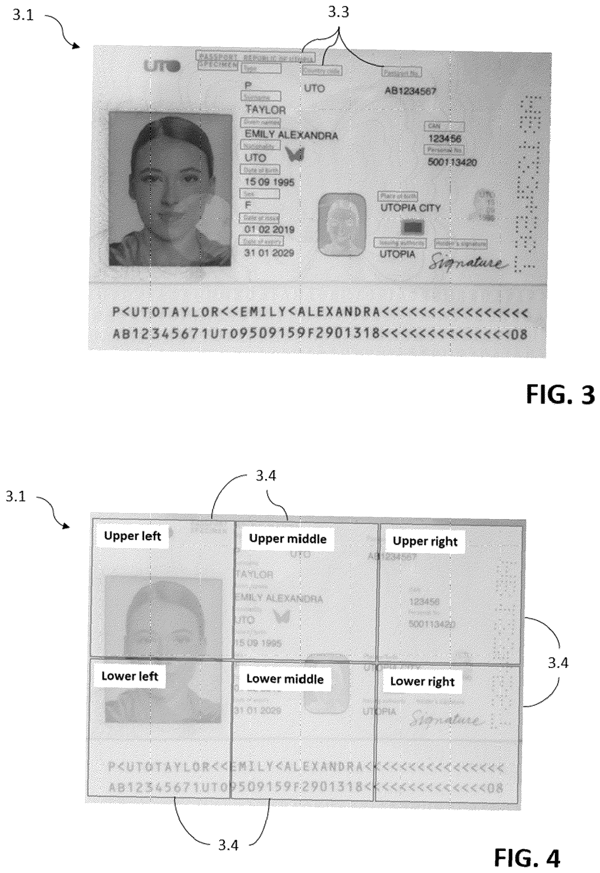

An example of ROIs (3.3) over a normalized, correctly oriented, cropped ID document image can be been in **figure** 3. ROIs are typically represented with bounding boxes for further class classification: image, text, etc. Therefore, during the detection phase, the captured image has been pre-processed through an AI system for border recognition, de-skewing and cropping resulting in a normalized image. As mentioned earlier, any or all of these steps are optional.

In particular, the detection module (8) comprises or, is configured to access, a database or keyword table (not shown) of pre-determined text fields to be possibly found in identity documents. These possible text fields are generic text fields or section titles associated with identity documents such as name, surname, date of birth, nationality, passport, etc.

Still during the detection phase in the image processing, the text extraction is performed using OCR techniques and, preferably, the detection module applies a nearest neighbor search within the reference database using the ROIs, namely an embedding vector for each ROI. From results of the search, it selects the most likely match candidate (if any).

In **figure 4****,** it is depicted the image from figure 3 further evenly split in 6 regions (3.4) with substantially the same area. Therefore, the image comprises an "upper left" region, an "upper middle" region, "upper right" region, "lower left" region, "lower middle" region, and "lower right" region.

Each of the detected text fields (3.3) is then automatically mapped to a different image region (3.4). In a basic embodiment, if at least one text field has been detected in a number of regions greater than a pre-established number (e.g., in at least 4 out of the 6 regions), then the quality of the captured image is considered as acceptable. From this, further requirements may be added to this baseline criteria such as some regions will have a greater weight or prevalence over others. That is, since text-type information can be usually found on the right hand side of the recto side of the ID document, not finding any text fields there can be considered as quick indicia of insufficient image quality.

As mentioned, other applicable criteria may be requiring a minimum threshold of area/text density ratio expected in certain regions and/or associating the image quality to a percentage of unfound known text fields when the reference type of the identity document is known or inferred. Since each of the text fields has associated a "bounding box", the area / text density ratio of a region expresses the sum of areas of detected text field-related bounding boxes per total area of the region.

All these criteria fine-tune the quality assessment depending on the use case. If the quality of the image is considered globally or holistically as acceptable, the following steps may take place.

The detection module (8) may send the processed information to the inference module (9) configured to classify the type of the identity document (if not known yet). This step is important to easing verifying some additional security features afterwards by the verification module (11).

In a particular embodiment, the inference module (9) applies a nearest neighbor search within a database of genuine reference identity documents (not shown) using the information sent by the detection module (8). From results of the search, the inference module obtains a list of possible types ID document ranked according to a most probable match of the unknown image to learned information of types of the ID document in the reference database.

Then, as mentioned, the biometrics module (10) extracts the face features from the identity document picture (3.1) of the analyzed image as well as from the user's face picture (3.2) to verify the matching. Subsequently or concurrently, the verification module (11) analyzes the extracted personal data from the image of the identity document (3.1) to authorize the enrollment / onboarding of the user (3) to the originally requested service. If these steps are performed at server side (4) by a backend service, the electronic device (2) is further configured to receive an authorization response from any of the server(s) through the network (5) and let or deny the access to the originally requested service accordingly.

The quality determination method of this invention can be advantageously integrated into the Artificial Intelligence system of existing remote identity verification solutions to automatically detect an acceptable quality frame from an in situ video recording. Thus, the quality module needs to communicate with the capture and the detection modules to synchronize the capturing step.

## Claims

1. Method for determining the quality of a captured image (3.1) of an identification document, wherein the identification document comprises machine-recognizable text fields (3.3), the method comprising the following steps:
- identifying at least two regions (3.4) of the captured image, the identified regions forming substantially the complete area of the identification document,
- applying a text recognition function to the captured image (3.1) and registering the text fields detected associated with each region,
- determining whether at least one text field has been detected per region, and
- if at least one text field has been detected in a number of regions greater than a pre-established number, then the quality of the captured image is consider as acceptable.

2. Method according to claim 1, wherein at least some of the different text fields detectable on the captured image are known beforehand.

3. Method according to claim 2, wherein the text fields are generic text fields associated with identity documents such as name, surname, date of birth, nationality, passport, etc.

4. Method according to any of claims 1 to 3, wherein the quality of the captured image is acceptable when pre-determined text fields are found in specific regions.

5. Method according to any of claims 1 to 4, wherein at least some of the different text fields detectable on the captured image have an unknown meaning.

6. Method according to any of claims 1 to 5, wherein the number of regions are at least 4 or at least 6.

7. Method according to any of claims 1 to 6, wherein each region of the captured image covers a similar area of the identification document.

8. Method according to any of claims 1 to 7, wherein the number and type of text fields detected per region is further processed for classifying the identity document of the image.

9. Method according to any of claims 1 to 8, wherein applying a text recognition function to the captured image comprises searching for objects on the captured image, identifying those related to semantic fields, and recognizing the text thereof.

10. Method according to any of claims 1 to 9, wherein the text recognition function is an optical character recognition (OCR) function.

11. Electronic device-based module (7) for determining the quality of a captured image (3.1) of an identification document, wherein the module is configured to:
- receive an image of an identification document captured by the electronic device, and
- determining the quality of the captured image by the method according to any of the claims 1 to 10.

12. Electronic device (2) configured to:
- receive a request for user (3) identity verification,
- capture an image or a video stream of an identification document and selecting one image frame thereof,
- determine, by itself or through a backend service, the quality of the captured image by using a module according to claim 11, and
- verify, by itself or through a backend service, the identity of the user by extracting and analyzing the information contained in the identification document captured and comparing it with user's data inputted separately.

13. Electronic device according to claim 12, wherein the user's data inputted separately comprises a picture of user's face (3.2) or user's authenticated data stored remotely.
